# EUROPEAN PATENT APPLICATION

(11) **EP 4 832 624 A1**
(43) Date of publication of application: **28.10.2026**
(21) Application number: 25736220.2
(22) Date of filing: 03.01.2025
(51) Int. Cl.: H04W 72/12

(54) **COMMUNICATION METHOD AND RELATED APPARATUS**

(30) Priority: 05.01.2024 CN 202410029274
(71) Applicant: Huawei Technologies Co., Ltd., Shenzhen, Guangdong 518129 (CN)
(72) Inventor: WANG, Yu, Shenzhen, Guangdong 518129 (CN); WANG, Jun, Shenzhen, Guangdong 518129 (CN); LUO, Hejia, Shenzhen, Guangdong 518129 (CN); KONG, Chuili, Shenzhen, Guangdong 518129 (CN)
(74) Representative: Gill Jennings & Every LLP
(86) International application number: PCT/CN2025/070354
(87) International publication number: WO 2025/146119

(57) **Abstract**

This application provides a communication method and a related apparatus, applied to a first node. The method includes: The first node sends first time information to a second node, where the first time information indicates the second node to receive and buffer data within first time, and/or indicates the second node to send data to a target terminal device UE within second time; and the first node sends first data to the second node within third time, where an association relationship exists between the third time and the first time and/or the second time, and at least one of the first node and the second node is a non-terrestrial network NTN node. In the method, the first node that distributes data indicates, to the second node that is added as a resource, data receiving and sending time of the second node, so that delay compensation can be performed for a data forwarding process of the second node, thereby reducing buffer pressure of the UE.

## Description

This application claims priority to China Patent Application No. 202410029274.7, filed with the China National Intellectual Property Administration on January 5, 2024, and entitled "COMMUNICATION METHOD AND RELATED APPARATUS", which is incorporated herein by reference in its entirety.

### TECHNICAL FIELD

This application relates to the field of satellite network technologies, and in particular, to a communication method and a related apparatus.

### BACKGROUND

A non-terrestrial communication network (non-terrestrial network, NTN) includes nodes such as a satellite network, a high-altitude platform, and an uncrewed aerial vehicle, has significant advantages such as global coverage, long-distance transmission, flexible networking, convenient deployment, and no limitation from geographical conditions, and has been widely applied to a plurality of fields such as maritime communication, positioning and navigation, emergency and disaster relief, scientific experiments, video broadcasting, and earth observation. A future terrestrial communication network, a satellite network, and the like are integrated and complement each other to form an integrated comprehensive communication network that provides seamless global coverage by sea, land, air, space, and ground, to meet a plurality of ubiquitous service requirements of users.

When a terminal device (user equipment, UE) is in a radio resource control (radio resource control, RRC) connected state, if a network side configures one master cell group (master cell group, MCG) and one secondary cell group (secondary cell group, SCG) for the UE, this is referred to as a dual connectivity mode; or if a network side configures a plurality of SCGs for the UE, this is referred to as a multi-connectivity mode. Existing multi-connectivity communication is usually designed for a terrestrial network. In a non-terrestrial communication network (for example, a satellite network) scenario, there is typically a large difference between a transmission path delay from a master node ((master node, MN), that is, a node carrying the MCG) to the UE and a transmission path delay from a secondary node ((secondary node, SN), that is, a node carrying the SCG) to the UE. A UE side needs to separately receive more user data from the MN and the SN, buffer the user data, and then combine the user data. This imposes a higher requirement on a buffer capability of the UE side.

### SUMMARY

Embodiments of this application provide a communication method and a related apparatus, where a first node that distributes data indicates, to a second node that is added as a resource, data receiving and sending time of the second node, so that delay compensation can be performed for a data forwarding process of the second node, thereby reducing buffer pressure of a UE.

According to a first aspect, this application provides a communication method, applied to a first node. The first node may be a network device or a chip in a network device. The method includes: sending first time information to a second node, where the first time information indicates the second node to receive and buffer data within first time, and/or indicates the second node to send data to a target terminal device UE within second time; and sending first data to the second node within third time, where an association relationship exists between the third time and the first time and/or the second time, and at least one of the first node and the second node is a non-terrestrial network NTN node.

**In** this embodiment of this application, the first node that distributes data sends the first time information to the second node that is added as a resource, to indicate the first time for the second node to receive data from the first node, or indicate the second time for the second node to send data to the target UE. In this way, time for the second node to send data to the target UE can be controlled by the first node. Because the first node can control time for the first node to send data to the target UE, the time for the first node to send data to the target UE and the time for the second node to send data to the target UE are coordinately controlled. This reduces a delay difference between the first node and the second node in sending data to the target UE, so that the target UE does not need to receive excessive data sent by the first node in a process of waiting for data from the second node, thereby reducing buffer pressure of the target UE. In addition, the first node sends data to the second node within the third time, and the third time is associated with the first time information. This ensures operating efficiency and operating quality (integrity of data receiving and sending) of the second node, and reduces energy consumption of the second node for waiting for data.

In some possible implementations, the method further includes: sending second time information to the target UE, where the second time information indicates the target UE to receive and buffer data within fourth time, or indicates the target UE to send data within fifth time, and the second time information is determined based on the first time information; and sending second data to the target UE within sixth time, where an association relationship exists between the sixth time and the fourth time and/or the fifth time.

In this embodiment of this application, the first node sends the second time information to the target UE, to indicate time for the target UE to receive or send data, and the sixth time for the first node to send the second data to the target UE is also related to time indicated by the second time information. In this way, the target UE can receive and send data in a more targeted time window, thereby avoiding extra power consumption that may be caused by long waiting time. In addition, the first node coordinates data transmission, thereby avoiding a case in which the target UE receives incomplete data.

In some possible implementations, the first time information is determined based on a first sending time and a second sending time, the first sending time is a moment at which the first node sends a first message to the second node, and the second sending time is a moment at which the second node feeds back a second message based on the first message. Alternatively, the first time information is determined based on a first sending time and a first receiving moment, and the first receiving moment is a moment at which the first node receives a second message from the second node.

In some possible implementations, the method includes at least one of the following: The first sending time is a timestamp in the first message; or the second sending time is a timestamp in the second message.

In this embodiment, the first sending time and the second sending time are represented in a form of a timestamp. This can ensure accuracy of the first sending time and the second sending time, thereby improving accuracy of the first time information.

In some possible implementations, the first time information is determined based on related information of the second node. The related information of the second node includes at least one of the following: location information of the second node, motion path information of the second node, or a buffer capability of the second node.

In this embodiment, the first time information is determined by using the related information of the second node, so that the first time information can be determined from a more macro perspective. This achieves longer available time and a wider range of the determined first time information, and reduces a frequency of updating the first time information.

In some possible implementations, the first node is a master node MN, the second node is a secondary node SN, the first message is an SN addition request message, the second message is an SN request acknowledgment message, and the SN addition request message is used to request to add the SN as a user plane resource for the MN.

In some possible implementations, the first time information is carried in an Xn user plane address indication message between the MN and the SN.

In some possible implementations, the second time information is carried in a radio resource control RRC reconfiguration message.

In this embodiment, the foregoing method is applied to an MN-SN scenario, signaling specifically used to carry the first time information and signaling used to carry the second time information are provided, and the first sending time and the second sending time that are used to determine the first time information are further provided. This reduces buffer pressure of the UE in a scenario in which the MN distributes data, and reduces power consumption of the UE for waiting for data.

In some possible implementations, the first data and the second data are packet data convergence protocol-protocol data units PDCP PDUs.

In some possible implementations, the method further includes at least one of the following: The first time information is carried in a PDCP PDU header of the first data; or the second time information is carried in a PDCP PDU header of the second data.

In this embodiment of this application, specific data formats of the first time information and the second time information are provided, so that the first time information and the second time information can be carried in data for sending without occupying existing information in the existing data, thereby reducing overheads. In addition, the first time information and the second time information are carried in data headers for sending, so that efficiency of obtaining the information by a receiver is improved.

In some possible implementations, the method further includes: receiving SN-related information from the SN, where the SN-related information includes at least one of the following: duration in which the SN is capable of providing a service for at least one UE or at least one area, or location-related information of the SN; and determining, based on the SN-related information, that the SN ends the service, and sending an SN addition request message to another SN other than the SN.

According to a second aspect, this application provides a communication method, applied to a second node. The second node may be a network device or a chip in a network device. The method includes: receiving first time information from a first node, where the first time information indicates the second node to receive and buffer data within first time, or indicates the second node to send data to a target terminal device UE within second time; and
based on the first time information, receiving and buffering first data within the first time, and/or sending third data to the target UE within the second time, where at least one of the first node and the second node is a non-terrestrial network NTN node.

In some possible implementations, before receiving the first time information from the first node, the method further includes: receiving a first message from the first node, and feeding back a second message to the first node based on the first message.

In some possible implementations, the first message and/or the second message include/includes timestamps/a timestamp.

In some possible implementations, the first node is an MN, the second node is an SN, the first message is an SN addition request message, the second message is an SN request acknowledgment message, and the SN addition request message is used to request to add the SN as a user plane resource for the MN.

In some possible implementations, the first time information is carried in an Xn user plane address indication message between the MN and the first SN.

In some possible implementations, the first data and the third data are PDCP PDUs.

In some possible implementations, the first time information is carried in a PDCP PDU header of the first data.

In some possible implementations, the method further includes: sending SN-related information to the MN, where the SN-related information includes at least one of the following: a buffer capability of the SN, duration in which the SN is capable of providing a service for at least one UE or at least one area, location-related information of the SN, or motion path information of the SN.

According to a third aspect, this application provides a communication method, applied to a target UE. The target UE may be a terminal device or a chip in a terminal device. The method includes: receiving second time information from a first node, where the second time information indicates the target UE to receive and buffer data within fourth time, or indicates the target UE to send data within fifth time; and based on the second time information, receiving and buffering first data from the first node and third data from a second node within the fourth time, and/or sending sixth data within the fifth time, where at least one of the first node and the second node is a non-terrestrial network NTN node.

In some possible implementations, the first node is an MN, and the second time information is carried in a radio resource control RRC reconfiguration message.

In some possible implementations, the first data and the third data are PDCP PDUs.

In some possible implementations, the second time information is carried in a PDCP PDU header of the first data.

According to a fourth aspect, this application provides a communication apparatus. The apparatus includes a transceiver unit, configured to send first time information to a second node, where the first time information indicates the second node to receive and buffer data within first time, and/or indicates the second node to send data to a target terminal device UE within second time. The transceiver unit is further configured to send first data to the second node within third time, where an association relationship exists between the third time and the first time and/or the second time, and at least one of a first node and the second node is a non-terrestrial network NTN node.

In some possible implementations, the transceiver unit is further configured to: send second time information to the target UE, where the second time information indicates the target UE to receive and buffer data within fourth time, or indicates the target UE to send data within fifth time, and the second time information is determined based on the first time information; and send second data to the target UE within sixth time, where an association relationship exists between the sixth time and the fourth time and/or the fifth time.

In some possible implementations, the first time information is determined based on a first sending time and a second sending time, the first sending time is a moment at which the first node sends a first message to the second node, and the second sending time is a moment at which the second node feeds back a second message based on the first message. Alternatively, the first time information is determined based on a first sending time and a first receiving moment, and the first receiving moment is a moment at which the first node receives a second message from the second node.

In some possible implementations, at least one of the following is included: The first sending time is a timestamp in the first message; or the second sending time is a timestamp in the second message.

In some possible implementations, the first time information is determined based on related information of the second node. The related information of the second node includes at least one of the following: location information of the second node, motion path information of the second node, or a buffer capability of the second node.

In some possible implementations, the first node is a master node MN, the second node is a secondary node SN, the first message is an SN addition request message, the second message is an SN request acknowledgment message, and the SN addition request message is used to request to add the SN as a user plane resource for the MN.

In some possible implementations, the first time information is carried in an Xn user plane address indication message between the MN and the SN.

In some possible implementations, the second time information is carried in a radio resource control RRC reconfiguration message.

In some possible implementations, the first data and the second data are packet data convergence protocol-protocol data units PDCP PDUs.

In some possible implementations, the method further includes at least one of the following: The first time information is carried in a PDCP PDU header of the first data; or the second time information is carried in a PDCP PDU header of the second data.

In some possible implementations, the transceiver unit is further configured to: receive SN-related information from the SN, where the SN-related information includes at least one of the following: duration in which the SN is capable of providing a service for at least one UE or at least one area, or location-related information of the SN; and determine, based on the SN-related information, that the SN ends the service, and send an SN addition request message to another SN other than the SN.

According to a fifth aspect, this application provides a communication apparatus. The apparatus includes: a transceiver unit, configured to receive first time information from a first node, where the first time information indicates a second node to receive and buffer data within first time, or indicates a second node to send data to a target terminal device UE within second time; and a processing unit, configured to: based on the first time information in combination with the transceiver unit, receive and buffer first data within the first time, and/or send third data to the target UE within the second time, where at least one of the first node and the second node is a non-terrestrial network NTN node.

In some possible implementations, before receiving the first time information from the first node, the transceiver unit is further configured to: receive a first message from the first node, and feed back a second message to the first node based on the first message.

In some possible implementations, the first message and/or the second message include/includes timestamps/a timestamp.

In some possible implementations, the first node is an MN, the second node is an SN, the first message is an SN addition request message, the second message is an SN request acknowledgment message, and the SN addition request message is used to request to add the SN as a user plane resource for the MN.

In some possible implementations, the first time information is carried in an Xn user plane address indication message between the MN and the first SN.

In some possible implementations, the first data and the third data are PDCP PDUs.

In some possible implementations, the first time information is carried in a PDCP PDU header of the first data.

In some possible implementations, the transceiver unit is further configured to send SN-related information to the MN, where the SN-related information includes at least one of the following: a buffer capability of the SN, duration in which the SN is capable of providing a service for at least one UE or at least one area, location-related information of the SN, or motion path information of the SN.

According to a sixth aspect, this application provides a communication apparatus. The apparatus includes: a transceiver unit, configured to receive second time information from a first node, where the second time information indicates a target UE to receive and buffer data within fourth time, or indicates a target UE to send data within fifth time; and a processing unit, configured to: based on the second time information in combination with the transceiver unit, receive and buffer first data from the first node and third data from a second node within the fourth time, and/or send sixth data within the fifth time, where at least one of the first node and the second node is a non-terrestrial network NTN node.

In some possible implementations, the first node is an MN, and the second time information is carried in a radio resource control RRC reconfiguration message.

In some possible implementations, the first data and the third data are PDCP PDUs.

In some possible implementations, the second time information is carried in a PDCP PDU header of the first data.

According to a seventh aspect, this application provides a communication device. The communication device includes a processor, and the processor is coupled to a memory. When the processor executes a computer program or instructions in the memory, the method in any one of the implementations of the third aspect is performed.

Optionally, the apparatus further includes the memory.

Optionally, the apparatus further includes a communication interface, and the processor is coupled to the communication interface.

Optionally, there is one or more processors, and there is one or more memories.

Optionally, the memory may be integrated with the processor, or the memory and the processor are disposed separately.

Optionally, a transceiver may include a transmitter machine (transmitter) and a receiver machine (receiver).

In an implementation, the communication device is a terminal device. When the communication device is the terminal device, the communication interface may be a transceiver or an input/output interface. Optionally, the transceiver may be a transceiver circuit. Optionally, the input/output interface may be an input/output circuit.

In another implementation, the communication device is a chip or a chip system. When the apparatus is the chip or the chip system, the communication interface may be an input/output interface, an interface circuit, an output circuit, an input circuit, a pin, a related circuit, or the like on the chip or in the chip system. The processor may alternatively be embodied as a processing circuit or a logic circuit.

According to an eighth aspect, this application provides a communication device. The communication device includes a processor, and the processor is coupled to a memory. When the processor executes a computer program or instructions in the memory, the method in any one of the implementations of the first aspect or the second aspect is performed.

Optionally, the apparatus further includes the memory.

Optionally, the apparatus further includes a communication interface, and the processor is coupled to the communication interface.

Optionally, there is one or more processors, and there is one or more memories.

Optionally, the memory may be integrated with the processor, or the memory and the processor are disposed separately.

Optionally, a transceiver may include a transmitter machine (transmitter) and a receiver machine (receiver).

In an implementation, the communication device is an access network device. When the communication device is the access network device, the communication interface may be a transceiver or an input/output interface. Optionally, the transceiver may be a transceiver circuit. Optionally, the input/output interface may be an input/output circuit.

In another implementation, the communication device is a chip or a chip system. When the apparatus is the chip or the chip system, the communication interface may be an input/output interface, an interface circuit, an output circuit, an input circuit, a pin, a related circuit, or the like on the chip or in the chip system. The processor may alternatively be embodied as a processing circuit or a logic circuit.

According to a ninth aspect, this application provides a communication system. The communication system includes the communication apparatuses in the fourth aspect to the sixth aspect.

According to a tenth aspect, this application provides a computer program product. The computer program product includes a computer program (which may also be referred to as code or instructions). When the computer program is run, a computer is enabled to perform the method in any one of the possible implementations of the first aspect to the third aspect.

According to an eleventh aspect, this application provides a computer-readable storage medium. The computer-readable medium stores a computer program (which may also be referred to as code or instructions). When the computer program is run on a computer, the computer is enabled to perform the method in any one of the possible implementations of the first aspect to the third aspect.

According to a twelfth aspect, this application further provides a circuit, including a processor and an interface, configured to execute a computer program or instructions stored in a memory, to perform the method in any one of the possible implementations of the first aspect to the third aspect.

### BRIEF DESCRIPTION OF DRAWINGS

FIG. 1 is a diagram of a satellite communication system according to an embodiment of this application;
FIG. 2A and FIG. 2B are diagrams of a control plane architecture and a user plane architecture in EN-DC according to embodiments of this application;
FIG. 3 is a diagram of a difference between a path delay from an MN SAT to a UE and a path delay from an SN SAT to the UE according to an embodiment of this application;
FIG. 4A is a flowchart of a communication method according to an embodiment of this application;
FIG. 4B(a) and FIG. 4B(b) are diagrams of first time information according to embodiments of this application;
FIG. 4C(a) to FIG. 4C(c) are diagrams of determining third time according to embodiments of this application;
FIG. 4D is a diagram of a process of determining first time information according to an embodiment of this application;
FIG. 4E is a flowchart of another communication method according to an embodiment of this application;
FIG. 4F(a) and FIG. 4F(b) are diagrams of processes of determining second time information according to embodiments of this application;
FIG. 4G is a diagram of a format of a PDCP PDU according to an embodiment of this application;
FIG. 5 is a flowchart of a dual connectivity communication method according to this embodiment;
FIG. 6A is a diagram of cell changes at different moments according to an embodiment of this application;
FIG. 6B is a flowchart of a dual connectivity communication method integrating SN switching according to an embodiment of this application;
FIG. 7A is a diagram of an MC anchor node communication scenario according to an embodiment of this application;
FIG. 7B is a flowchart of a communication method applied to an MC anchor node according to an embodiment of this application;
FIG. 7C is a flowchart of another communication method applied to an MC anchor node according to an embodiment of this application;
FIG. 7D(a) and FIG. 7D(b) are flowcharts of an MC anchor node connection and switching method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a hardware structure of a communication apparatus according to an embodiment of this application.

### DESCRIPTION OF EMBODIMENTS

The following describes embodiments of the present invention with reference to the accompanying drawings in embodiments of the present invention.

In the specification, the claims, and the accompanying drawings of this application, the terms "first", "second", "third", "fourth", and the like are intended to distinguish between different objects but do not indicate a specific order. In addition, the terms "including" and "having" and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" refers to two or more than two. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one of the following" or a similar expression thereof represents any combination of listed items. For example, at least one of A, B, and (or) C may represent the following cases: Only A exists, only B exists, only C exists, both A and B exist, both B and C exist, both A and C exist, and A, B, and C exist, where A, B, and C may be singular or plural.

First, a network architecture corresponding to embodiments of this application is described.

The technical solutions of this application may be applied to a non-terrestrial network (non-terrestrial network, NTN) system such as a satellite communication system, high-altitude platform (high-altitude platform station, HAPS) communication system, or an uncrewed aerial vehicle, for example, an integrated communication and navigation (integrated communication and navigation, IcaN) system, a global navigation satellite system (global navigation satellite system, GNSS), and an ultra-dense low earth orbit satellite communication system. The satellite communication system can be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

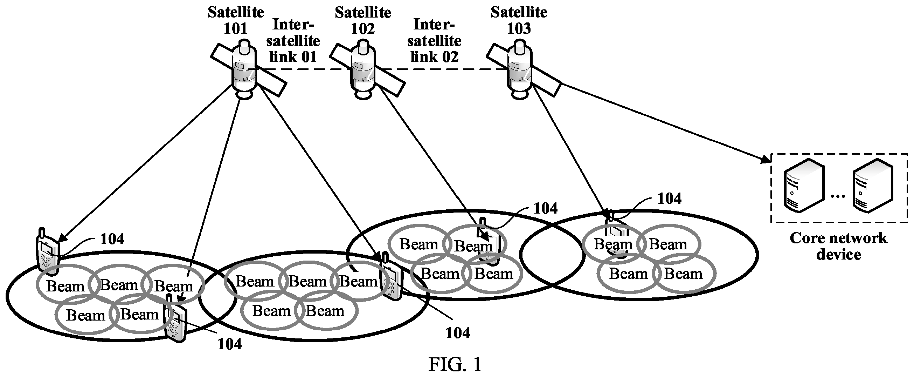

The satellite communication system includes a user equipment and a network device. The network device may include one or more satellites and one or more terrestrial station devices. The terrestrial station device may also be referred to as a core network (core network, CN) device. The satellite may be a low earth orbit (low earth orbit, LEO) satellite, a non-geostationary orbit (non-geostationary earth orbit, NGEO) satellite, or the like. FIG. 1 is a diagram of a mobile satellite communication system according to an embodiment of this application. As shown in FIG. 1, the satellite communication system includes a satellite 101, a satellite 102, and a satellite 103. Each satellite may provide a communication service, a navigation service, a positioning service, and the like for a terminal device by using a plurality of beams. The satellite in this scenario is an LEO satellite. The satellite 103 is connected to a terrestrial station device (a core network device). The satellite uses the plurality of beams to cover a service area, and different beams may be used to perform communication in one or more manners of time division, frequency division, and space division. The satellite performs wireless communication with the terminal device by using a broadcast communication signal, a navigation signal, and the like. The satellite may perform wireless communication with the terrestrial station device. The satellite mentioned in embodiments of this application may be a satellite base station, may include an orbit receiver or a repeater configured to relay information, or may be a network side device mounted on the satellite.

The satellite communication system includes a transparent satellite architecture and a non-transparent satellite architecture. Transparent transmission is also referred to as bent-pipe forwarding transmission, and means that only frequency conversion, signal amplification, and the like are performed on a signal on the satellite, and the satellite is transparent to the signal as if not existing. Non-transparent transmission is also referred to as regenerative (on-satellite access/processing) transmission, and means that the satellite has a part or all of functions of a base station. For example, the satellite 101 and the satellite 102 in the figure are in the non-transparent satellite architecture, and the satellite 103 is in the transparent satellite architecture. In addition, the satellite can operate in an earth-fixed (earth-fixed) mode, a quasi earth-fixed (quasi earth-fixed) mode, or an earth-moving (earth-moving) mode.

The following describes the foregoing terms.

The terminal device mentioned in embodiments of this application includes various handheld devices, vehicle-mounted devices, wearable devices, or compute devices that have a wireless communication function, or other processing devices connected to a wireless modem, and may be specifically a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, or a machine type communication device, or may be a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

The terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears data services, and the like. The CN may further include network elements such as an access and mobility management network element (Access and Mobility Management Function, AMF), a session management network element (Session Management Function, SMF), an authentication server network element (Authentication Server Function, AUSF), a policy control node (Policy control Function, PCF), and a user plane function (User Plane Function, UPF) network element. The AMF network element is configured to manage access and mobility of the UE, and is mainly responsible for functions such as UE authentication, UE mobility management, and UE paging.

The network device may alternatively include but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in a 5G system, or one or one group (including a plurality of antenna panels) of antenna panels of a base station in a 5G system. In addition, the network device may alternatively be a network node that forms a gNB or a TP, for example, a BBU or a distributed unit (distributed unit, DU). Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system.

FIG. 1 is a diagram of a satellite communication system according to this application. The communication system includes the satellite 101, the satellite 102, and the satellite 103. Each satellite may provide a communication and positioning service for a mobile station by using a plurality of beams. The satellite 103 is connected to a core network device. The satellite may be an LEO satellite, an MEO satellite, a GEO satellite, or the like. The mobile station in this application may include various handheld devices, vehicle-mounted devices, wearable devices, or compute devices that have a wireless communication function, or other processing devices connected to a wireless modem. The mobile station may alternatively be a subscriber unit, a cellular phone, a smartphone, a wireless data card, a personal digital assistant computer, a tablet computer, a wireless modem, a handheld device, a laptop computer, a machine type communication terminal, or the like.

The following describes a conventional technology of this application.

Operation modes of a UE in an RRC connected state: When a UE is in a connected state, if a network side configures one master cell group (MCG) and one secondary cell group (SCG) for the UE, this is referred to as dual connectivity (dual connectivity, DC); or if SCGs are provided by a plurality of secondary nodes ((secondary nodes, SNs), that is, nodes carrying the SCGs), this is referred to as multi-connectivity (multi-connectivity, MC). There may be a plurality of cells (Cells) in the MCG, where one of the cells is used to initiate initial access, and this cell is referred to as a primary cell (PCell); and the other cells are referred to as secondary cells (Scells). Similarly, in the SCG, there is also a primary cell, namely, a primary secondary cell (PSCell), and the other cells are also collectively referred to as secondary cells. For example, in an EN-DC scenario, to be specific, DC in a long term evolution (long time evolution, LTE) technology and new radio (new radio, NR), a core network is a 4G core network (evolved packet core, EPC), a control plane anchor is an evolved NodeB (evolved NodeB, eNodeB or eNB), and a user plane anchor is an eNodeB, a next generation NodeB (next generation NodeB, gNodeB or gNB), or an EPC.

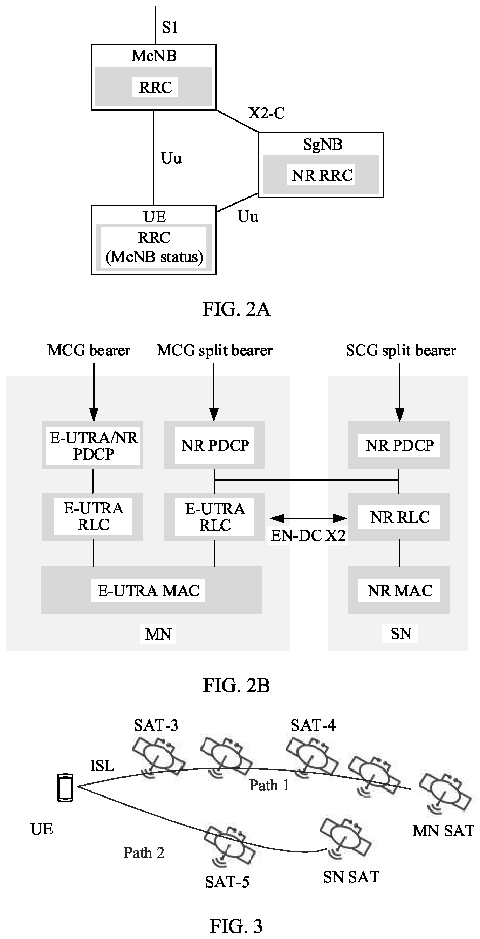

FIG. 2A and FIG. 2B are diagrams of a control plane architecture and a user plane architecture in EN-DC according to embodiments of this application. FIG. 2A is a diagram of the control plane architecture. A control plane anchor and signaling management are provided by a master eNB (MeNB). A secondary gNB (SgNB) is only used for user plane data transmission.

FIG. 2B is a diagram of the user plane architecture. In an MCG bearer (MCG bearer) scenario, an MCG sends data to a UE. A PDCP layer may be an evolved UMTS terrestrial radio access (evolved universal terrestrial radio access, E-UTRA) (air interface of GPP LTE) PDCP layer, or may be an NR PDCP layer. A radio link control (radio link control, RLC) protocol layer is an E-UTRA RLC layer. A medium access control (medium access control, MAC) layer is an E-UTRA RLC layer.

In an MCG distribution bearer (MCG split bearer) scenario, the MCG and an SCG coordinately distribute user data, to be specific, the UE receives user data from the MCG and sends the user data, and the UE also receives user data from the SCG and sends the user data; and the user data may be finally combined on a UE side or a network side. A typical distribution decision is made at the PDCP layer for data splitting. In this case, both the MCG and the SCG use NR PDCP.

It can be learned from the foregoing descriptions that existing multi-connectivity communication is usually designed for a terrestrial network. In a non-terrestrial network (for example, a satellite network) scenario, there is typically a large difference between a transmission path delay from an MN to a UE and a transmission path delay from an SN to the UE. For details, refer to FIG. 3. FIG. 3 is a diagram of a difference between a path delay from an MN satellite (SATellite, SAT) to a UE and a path delay from an SN SAT to the UE according to an embodiment of this application. As shown in FIG. 3, a path 1 corresponds to the path delay from the MN to the UE, and a path 2 corresponds to the path delay from the SN to the UE. A UE side needs to buffer more user data, and then combine the user data. This imposes a higher requirement on a buffer capability of the UE side.

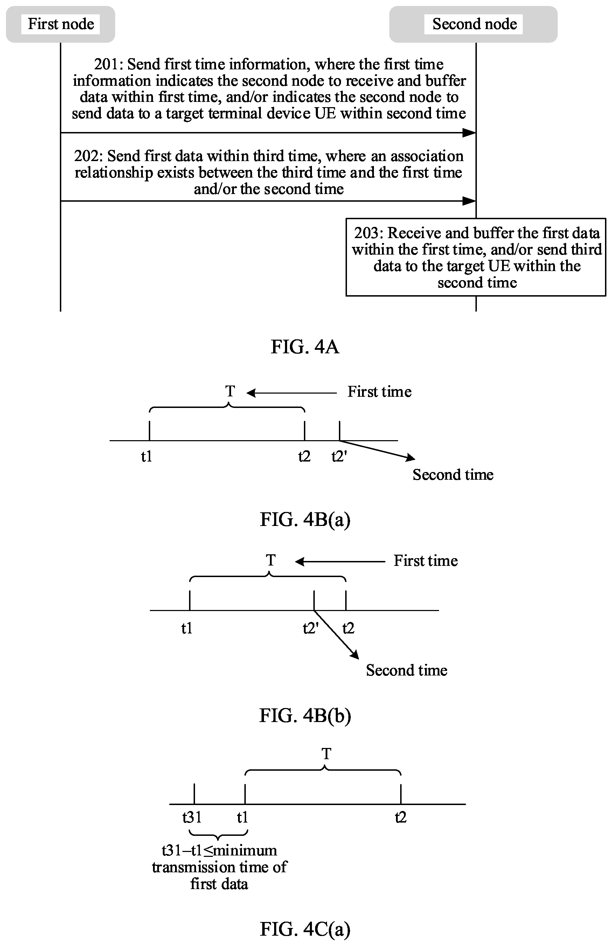

Based on this, FIG. 4A is a flowchart of a communication method according to an embodiment of this application. As shown in FIG. 4A, the method includes the following steps.

201: A first node sends first time information to a second node, where the first time information indicates the second node to receive and buffer data within first time, and/or indicates the second node to send data to a target terminal device UE within second time, and at least one of the first node and the second node is a non-terrestrial network NTN node.

In this embodiment of this application, at least one of the first node and the second node is an NTT node. In other words, both the first node and the second node may be NTN nodes; the first node is an NTN node, and the second node is not an NTN node; or the first node is not an NTN node, and the second node is an NTN node. When the first node or the second node is an NTN node, the node may be specifically an LEO satellite, an MEO satellite, a GEO satellite, or the like. When the first node or the second node is not an NTN node, the node is a terrestrial network (terrestrial network, TN) node, and may be specifically a terrestrial base station.

When at least one of the first node and the second node is an NTN node, a transmission distance/delay between the first node and the second node may be large. For example, the delay may reach a second level or even tens of seconds. The first node is a node that distributes data, and the second node is a node to which data is distributed. The first node and the second node each may be used as a network device that sends data to the target UE (a UE that receives data). In other words, there are two data transmission paths, where a first path is a path of the first node → (to) the target UE, and a second path is a path of the first node → the second node → the target UE. Because the distance between first node and the second node is large (where for example, both the first node and the second node are NTN nodes, and are located in different types of orbits, and transmission from the first node to the second node usually needs to be completed through many hops (that is, hops)), data transmission time from the first node to the second node is long, and consequently, data transmission time of the second path is significantly greater than data transmission time of the first path. The target UE needs to perform related processing after receiving data from the two paths, which greatly increases buffer pressure of the target UE.

It should be noted that data transmission discussed above is downlink transmission, to be specific, unidirectional transmission from a network device to a terminal device (where one or more relay nodes may be further included). A case of uplink transmission is not discussed in this embodiment.

To reduce a difference between the data transmission time of the first path and the data transmission time of the second path, in this embodiment of this application, the first node sends the first time information to the second node, to indicate the second node to receive and buffer data within the first time (where the first time is a duration range, that is, a time period). In other words, the second node does not receive data after the first time, and only processes the received and buffered data and sends processed data to the target UE.

FIG. 4B(a) and FIG. 4B(b) are diagrams of the first time information according to embodiments of this application. As shown in FIG. 4B(a) and FIG. 4B(b), time between a moment t1 and a moment t2 is first time T, and the first time information may be represented in any one of the following forms:
1: the moment t1 at which the second node starts to receive data and a time window T in which the second node receives and buffers data;
2: the moment t1 at which the second node starts to receive data and the moment t2 at which the second node stops receiving data; and
3: a timer with effective duration of T that is started at the moment t1, where the moment t1 at which the timer is triggered may be an agreed moment, for example, a moment at which the second node receives a 1^{st} data packet from the first node, a moment at which the UE receives a 1^{st} data packet from the first node or the second node, or another moment such as a start slot of PDCCH (Physical Downlink Control Channel, physical downlink control channel) scheduling.

The first time may be determined based on the foregoing 1, 2, or 3. Alternatively, the first time information may be in another form. This is not specifically limited in embodiments of this application.

Alternatively, the first time information sent by the first node to the second node may indicate the second node to send data to the target UE after the second time (where the second time is a moment). This means that the second node needs to complete data receiving, buffering, and processing before the second time, to send data after the second time (where duration for data sending is not limited, and the duration continues until all received data is sent). As shown in FIG. 4B(a), second time t2' may be after the moment t2, indicating that the second node processes (for example, combines, packs, or adds header information) and sends all data after receiving the data. Alternatively, as shown in FIG. 4B(b), second time t2' may be before the moment t2, indicating that the second node may send data to the target UE while receiving the data. In this case, the first time information may be represented in any one of the following forms:
(1) the moment t2' at which the second node starts to send data;
(2) the moment t2 at which the second node stops receiving data and data processing time t', where
   this is only for the case shown in FIG. 4B(a); and
(3) a timer with an end moment of t2'.

The second time may be determined based on the foregoing (1), (2), or (3). Alternatively, the first time information may be in another form. This is not specifically limited in embodiments of this application.

In another case, the first time information may indicate both the first time and the second time. A specific indication form may be a combination of any one of the foregoing manners 1, 2, and 3 and any one of the foregoing manners (1), (2), and (3), or may be another indication form. This is not specifically limited.

Optionally, a manner in which the first node sends the first time information to the second node includes at least one of the following manners.
A. Send the first time information by using signaling for the first node to add the second node.

As a data distribution node, the first node needs to add the second node as a resource node for the first node to forward data. Therefore, the first time information may be carried, for sending, in the signaling for the first node to add the second node. In this way, sending of the first time information may be completed before the two nodes perform data transmission, and the first time information needs to be configured only once in the signaling, so that the second node receives and sends all data based on information indicated by the first time information. This reduces resource overheads for sending the first time information, and ensures effectiveness of configuring the first time information.

B. Send the first time information by using data sent by the first node to the second node.

Any piece of data distributed by the first node to the second node can carry first time information, so that this piece of data is received and sent based on the carried first time information. This can ensure flexibility and real-time performance of configuring first time information corresponding to each piece of data.

Optionally, the foregoing manners A and B for sending the first time information may be combined, to be specific, the second node determines data receiving and sending time based on a combination of partial first time information carried in the signaling and partial first time information carried in the data. For example, the first time information in the signaling received by the second node indicates to send data after the moment t2'. Then, due to a location change of the first node and/or a location change of the second node, or due to a property (for example, a priority) and the like of data, data 1 further carries (-0.1 ms) supplementary first time information used to partially update the first time information. In this case, the second node sends the data 1 to the target UE after t2'-0.1 milliseconds. For data 2 that carries no supplementary first time information, the data 2 is sent after the moment t2', as indicated by the signaling. For data 3, the data 3 carries first time information, and the first time information is indicated as unique first time information corresponding to the data 3. In other words, for the data 3, the first time information indicated by the signaling is completely updated. The second node receives and sends the data 3 based entirely on the first time information carried in the data 3. According to this method, resource overheads for sending the first information can be reduced, and flexibility and real-time performance requirements of each piece of data on sending time can be ensured.

202: The first node sends first data to the second node within third time, where an association relationship exists between the third time and the first time and/or the second time.

The first node sends the first data to the second node within the third time, where the third time needs to be associated with time (one of the first time or the second time, or both the first time and the second time) indicated by the first time information, to ensure that the first node can complete sending of the corresponding data and the second node can receive all the data from the first node.

That the third time is associated with the first time and/or the second time includes two meanings: (1) The third time is determined based on the first time and/or the second time. (2) The first node first determines the third time and then determines the first time and/or the second time based on the third time.

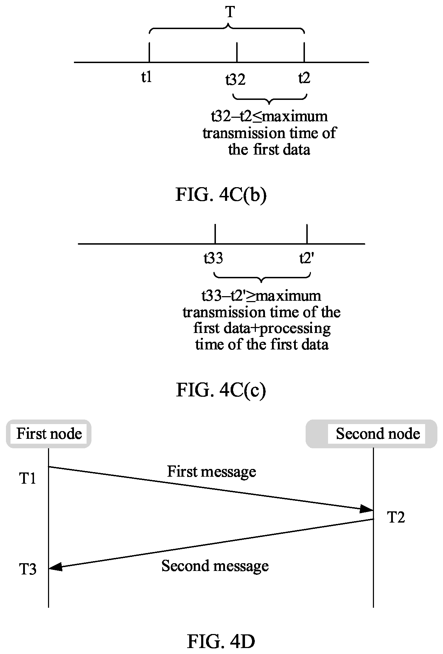

FIG. 4C(a) to FIG. 4C(c) are diagrams of determining the third time according to embodiments of this application. As shown in FIG. 4C(a) to FIG. 4C(c), at least one of the following manners is provided to determine the third time based on the first time and/or the second time.
a: Determine the third time based on the moment t1 at which the second node starts to receive data and minimum transmission time of the first data.

As shown in FIG. 4C(a), third time t31 at which the first node sends data is earlier than the moment t1 at which the second node starts to receive data, and a difference between t31 and t1 is less than or equal to the minimum transmission time of the first data, so that the first data sent earliest by the first node can be received by the second node.
b: Determine the third time based on the moment t2 at which the second node stops receiving data and maximum transmission time of the first data.

As shown in FIG. 4C(b), third time t32 at which the first node sends data is earlier than the moment t2 at which the second node stops receiving data, and a difference between t32 and t2 is less than or equal to the maximum transmission time of the first data, so that the first data sent last by the first node can be received by the second node.
c: Determine the third time based on the moment t2' at which the second node starts to send data and maximum transmission time and processing time of the first data.

As shown in FIG. 4C(c), third time t33 at which the first node sends data is earlier than the moment t2' at which the second node starts to send data, and a difference between t33 and t2' is less than or equal to the minimum transmission time of the first data plus the processing time of the first data, so that the first data sent earliest by the first node can be received, processed, and sent by the second node without idle waiting.

The manners a, b, and c for determining the third time may be used in combination, or another manner for determining the third time may be further included. This is not limited in embodiments of this application.

It should be noted that the maximum transmission time and the minimum transmission time may also be equivalent to transmission time, in other words, the maximum transmission time and the minimum transmission time are not distinguished. For example, the third time is determined based on the moment t1 at which the second node starts to receive data and the transmission time of the first data. The same descriptions may be applied to the other examples. Details are not described herein again.

In the case in which the first node first determines the third time and then determines the first time and/or the second time based on the third time, the first node may specifically add, to the third time, time (which may include maximum transmission time or minimum transmission time) required for the first node to transmit data to the second node, and further add time for the second node to process received data. Details are not described herein again.

203: Based on the first time information, the second node receives and buffers the first data within the first time, and/or sends third data to the target UE within the second time.

After receiving the first time information sent by the first node, the second node receives and buffers data within the first time if determining the first time from the first time information; or sends, after the second time if determining the second time based on the first time information, the third data to the target UE based on the first data received from the first node. The first data and the third data may be data with same content, or may be data to which different information is added (for example, header information and address information are added). If determining both the first time and the second time based on the first time information, the second node may receive data based on the first time, and send data based on the second time.

In this embodiment of this application, the first node that distributes data sends the first time information to the second node that is added as a resource, to indicate the first time for the second node to receive data from the first node, or indicate the second time for the second node to send data to the target UE. In this way, time for the second node to send data to the target UE can be controlled by the first node. Because the first node can control time for the first node to send data to the target UE, the time for the first node to send data to the target UE and the time for the second node to send data to the target UE are coordinately controlled. This reduces a delay difference between the first node and the second node in sending data to the target UE, so that the target UE does not need to receive excessive data sent by the first node in a process of waiting for data from the second node, thereby reducing buffer pressure of the target UE. In addition, the first node determines, based on the first time information, the third time for sending data to the second node. This ensures operating efficiency and operating quality (integrity of data receiving and sending) of the second node, and reduces energy consumption of the second node for waiting for data.

Optionally, the first time information is determined based on a first sending time and a second sending time, the first sending time is a moment at which the first node sends a first message to the second node, and the second sending time is a moment at which the second node feeds back a second message based on the first message. Alternatively, the first time information is determined based on a first sending time and a first receiving moment, and the first receiving moment is a moment at which the first node receives a second message from the second node.

FIG. 4D is a diagram of a process of determining the first time information according to an embodiment of this application. As shown in FIG. 4D, the time at which the first node sends the first message to the second node is a first sending time T1, and the moment at which the second node feeds back the second message to the first node based on the first message is a second sending time T2 (it is assumed that time for the second node to generate the second message based on the first message is extremely short, and can be ignored compared with transmission time of the first message or the second message). The first node may determine the first time information based on T2 and T1, which is specifically T01=T2-T1, where T01 corresponds to the transmission delay between the first node and the second node. If the first time information indicates time T3 for the second node to send data to the target UE, and the time for the first node to send data to the target UE is T0, T3=T0+T01.

Alternatively, the first node may determine the first time information based on T1 and a first receiving moment T3 at which the first node receives the second message, which is specifically T02=(T3-T1)/2, where T02 corresponds to the transmission delay between the first node and the second node, and T3=T0+T02.

The first message may be a signaling message described above, and correspondingly, the second message may be a feedback message of the signaling message. Alternatively, both the first message and the second message may be messages carrying data. Details are not described herein again.

Optionally, the method further includes at least one of the following: The first sending time is a timestamp in the first message; or the second sending time is a timestamp in the second message.

In other words, the first sending time and the second sending time may be represented in a form of a timestamp. This can ensure accuracy of the first sending time and the second sending time, thereby improving accuracy of the first time information.

Optionally, the first time information is determined based on related information of the second node. The related information of the second node includes at least one of the following: location information of the second node, motion path information of the second node, or a buffer capability of the second node.

When learning of the location information of the second node, the first node may determine a distance between the first node and the second node, to learn of transmission time (which may include maximum transmission time and minimum transmission time) for sending data to the second node, and finally determine the first time for the second node to receive data from the first node.

Alternatively, when learning of the motion path information of the second node, the first node may also learn of a distance between the second node and the first node at a moment or in a time period, to learn of transmission time for sending data to the second node, and finally determine the first time for the second node to receive data from the first node.

Alternatively, when learning of the buffer capability of the second node and transmitting data to the second node at a specific rate, the first node can learn of duration in which the second node receives data, to determine the first time for the second node to receive data from the first node.

The foregoing examples are described by using determining the first time as an example. It may be clearly determined that the first node may also determine the second time based on the foregoing information. Details are not described herein again. In addition, the related information of the second node may be used to determine the first time information in combination. For example, a specific combination manner is combining the location information of the second node and the buffer capability of the second node to determine the first time for the second node to receive data. Examples are not described herein one by one.

The first time information is determined by using the related information of the second node, so that the first time information can be determined from a more macro perspective. This achieves longer available time and a wider range of the determined first time information, and reduces a frequency of updating the first time information.

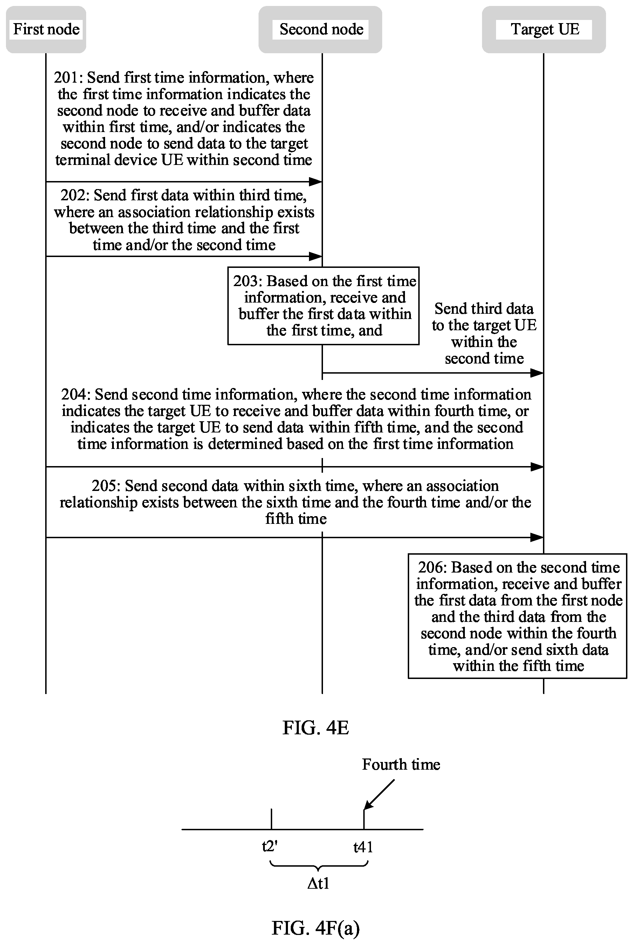

FIG. 4E is a flowchart of another communication method according to an embodiment of this application. Based on the foregoing method, the method further includes the following steps.

204: The first node sends second time information to the target UE, where the second time information indicates the target UE to receive and buffer data within fourth time, or indicates the target UE to send data within fifth time, and the second time information is determined based on the first time information.

After sending the first time information to the second node, the first node may further send the second time information to the target UE, to indicate time for the target UE to receive data, or indicate time for the target UE to send data. In this way, the time for the UE to receive data may correspond to the time for the first node to send data and time for the second node to send data, thereby avoiding excessive power consumption caused by excessively long waiting time of the target UE, or avoiding receiving of incomplete data from the first node and the second node.

The second time information is determined based on the first time information. In other words, the fourth time and/or the fifth time indicated by the second time information are/is determined based on the first time and/or the second time indicated by the first time information.

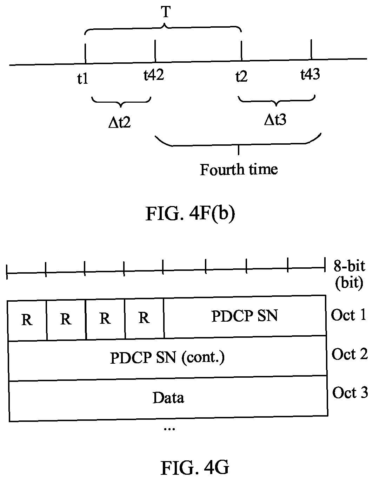

Specifically, FIG. 4F(a) and FIG. 4F(b) are diagrams of processes of determining the second time information according to embodiments of this application. As shown in FIG. 4F(a), if the first time information indicates the second time t2', fourth time t41 (a moment at which the target UE starts to receive data) indicated by the second time information may be t41=t2'+Δt1. Δt1 may be a constant set based on a type of the second node, and the type of the second node includes an LEO satellite, an MEO satellite, a GEO satellite, or the like. Alternatively, Δt1 may be a value set based on a distance between the second node and the target UE, and Δt1 is less than or equal to minimum transmission time corresponding to data transmission from the second node to the target UE, to ensure that the target UE can receive, in time, data sent earliest by the second node.

Alternatively, as shown in FIG. 4F(b), if the first time information indicates the first time (including t1 and/or t2), the fourth time indicated by the second time information includes t42 (a moment at which the target UE starts to receive data): t42=t1+Δt2. Similarly, Δt2 may be a constant set based on a type of the second node. Alternatively, Δt2 is less than or equal to minimum transmission time corresponding to data transmission from the second node to the target UE plus the time for the second node to process the first data, to ensure that the target UE can receive data earliest sent by the second node. Correspondingly, the fourth information t43 (a moment at which the target UE starts to end data) indicated by the second time information is t43=t2+Δt3. Δt3 is greater than or equal to the maximum transmission time corresponding to data transmission from the second node to the target UE, to ensure that the target UE can receive data sent last by the second node.

In addition, if the second time information indicates the fifth time, after determining the fourth time, the first node may determine that the fifth time is t5=t4+Δt', where t4 represents the fourth time, and Δt' is time for the target UE to process received data.

The second time information may alternatively be determined based on the first time information in other manners, which are not listed one by one herein.

**In** addition, a representation form of the second time information may also be the foregoing representation form 1, 2, or 3 of the first time information, or may be the foregoing representation forms(1), (2), or (3) of the first time information.

A manner in which the first node sends the first time information to the target UE includes at least one of the following: downlink control information (downlink control information, DCI), RRC signaling, data sent by the first node to the target UE, and the like.

205: The first node sends second data to the target UE within sixth time, where an association relationship exists between the sixth time and the fourth time and/or the fifth time.

That the association relationship exists between the sixth time and the fourth time and/or the fifth time also includes two meanings: (1) The sixth time is determined based on the fourth time and/or the fifth time, in other words, the sixth time may be determined based on the first time information. (2) The first node first determines the sixth time and then determines the fourth time and/or the fifth time based on the sixth time.

First, the foregoing meaning (1) is described. It is assumed that the target UE is indicated to receive data from the second node within the fourth time, and correspondingly, the target UE also receives the second data from the first node within the fourth time. Alternatively, the target UE receives the second data from the first node within a range of the fourth time ± (plus/minus) a first time threshold. The first time threshold may be a small value, for example, at an ms (millisecond) level, for example, 1 ms, 2 ms, 4 ms, or 8 ms.

If the target UE is indicated to send data within the fifth time, the first node needs to ensure that processing of the sent data can be completed within corresponding time, where the corresponding time=the fifth time time for the target UE to process the data. Therefore, the first node determines that the sixth time=the fifth time-the time for the target UE to process the data-time for transmitting the data from the first node to the target UE.

Then, the foregoing meaning (2) is described. For example, the first node may determine, based on information such as signal quality and service duration of the first node, the sixth time for the target UE to send data, then determine, based on information such as the distance or the delay between the first node and the second node, the third time for sending data to the second node, and then determine content such as the first time information and the second time information, that is, determine the fourth time and/or the fifth time, based on the third time.

The sixth time may alternatively be determined in other manners, which are not listed one by one herein.

206: The target UE receives the second time information from the first node, and based on the second time information, receives and buffers the first data from the first node and the third data from the second node within the fourth time, and/or sends sixth data within the fifth time.

The target UE receives the second time information from the first node, and determines, based on the second time information, the fourth time for receiving and buffering data. In this case, the target UE may receive the first data from the first node or receive the third data from the second node within the fourth time. The first data and the third data may be processed during receiving, or the first data and the third data may be processed after data receiving within the fourth time is completed. Specifically, the processing includes data parsing for obtaining data content, data feedback, and the like.

Alternatively, the target UE determines, based on the second time information, the fifth time for sending data. In this case, the target UE may receive the first data from the first node and the third data from the second node, process the data, and ensure that the data is sent within the fifth time. To further ensure that the target UE can complete data processing within the fifth time, data may be processed while being received, to avoid data processing timeout that may be caused by final processing of a large amount of data.

In this embodiment of this application, the first node sends the second time information to the target UE, to indicate time for the target UE to receive or send data, and the first node also sends the second data to the target UE based on time indicated by the second time information. In this way, the target UE can receive and send data in a more targeted time window, thereby avoiding extra power consumption that may be caused by long waiting time. In addition, the first node coordinates data transmission, thereby avoiding a case in which the target UE receives incomplete data.

In addition, it should be noted that the first node may be connected to a plurality of second nodes at the same time. In this case, the first node sends the first time information to each second node to indicate the first time and/or the second time. Correspondingly, the first node may send the second time information to the target UE served by the second node to indicate the fourth time and/or the fifth time. Details are not described herein again.

Optionally, the first data, the second data, and the third data are packet data convergence protocol-protocol data units PDCP PDUs.

In this embodiment, the first node is configured to distribute data, where one part of data is reserved by the first node, and the other part of data is distributed to the second node. As described in the foregoing related content in FIG. 2A and FIG. 2B, the distribution decision is made at the PDCP layer. Therefore, the first data sent by the first node to the second node may be a PDCP PDU. Correspondingly, the first node reserves a part of data as the second data, and sends the second data to the target UE in a form of a PDCP PDU. Further, the third data sent by the second node to the target UE may also be in a form of a PDCP PDU.

Optionally, the method further includes at least one of the following: The first time information is carried in a PDCP PDU header of the first data; or the second time information is carried in a PDCP PDU header of the second data.

As described above, the first time information and the second time information may be carried in signaling, or may be carried in data. When the first time information and the second time information are carried in data and the data is in a form of a PDCP PDU, the first time information and the second time information may be carried in PDCP PDU headers.

For details, refer to FIG. 4G. FIG. 4G is a diagram of a format of a PDCP PDU according to an embodiment of this application. As shown in FIG. 4G, a PDCP PDU header has an 8-bit length, including a 4-bit PDCP sequence number (sequence number, SN). A remaining part may further include PDCP SN continued (cont.) and data (or payload, payload). The PDCP PDU header further includes 4-bit reserved (reserved) fields (R fields in the figure), and these reserved fields may indicate the first time information or the second time information. Specific representation forms of the first time information and the second time information are described above, and details are not described herein again.

In this embodiment of this application, specific data formats of the first time information and the second time information are provided, so that the first time information and the second time information can be carried in data for sending without occupying existing information in the existing data, thereby reducing overheads. In addition, the first time information and the second time information are carried in data headers for sending, so that efficiency of obtaining the information by a receiver is improved.

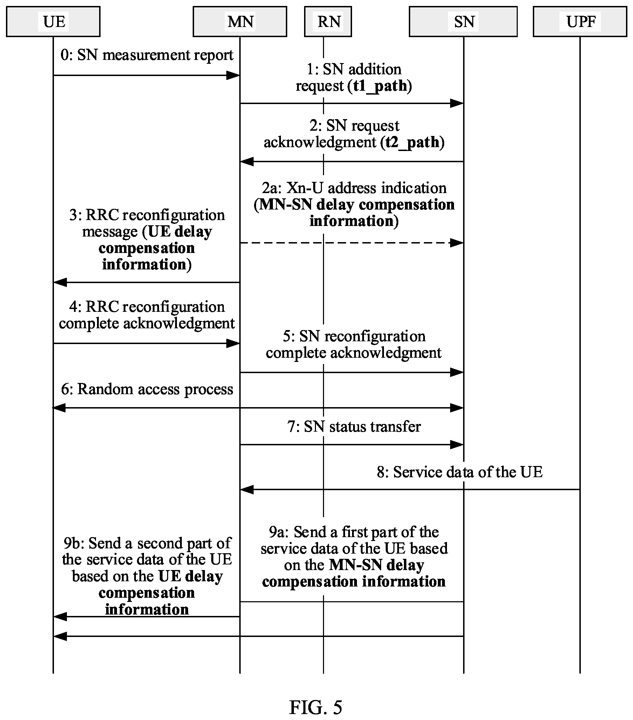

Optionally, the first node is an MN, and the second node is an SN. Based on this, FIG. 5 is a flowchart of a dual connectivity (including one MN and one SN) communication method according to this embodiment. A corresponding operational procedure is as follows.

Step 0: A UE reports an SN measurement report to the MN.

Content of the SN measurement report may include SN-related cell signal quality, cell location related information, buffer capability information of the UE, and SN orbit related information (for example, an orbit type and a propagation delay). Orbit type information indicates that an orbit is an ascending orbit (moving from the south to the north) and/or a descending orbit (moving from the north to the south), that is, may indicate only that the orbit is an ascending orbit (or a descending orbit), or indicate both an ascending orbit and a descending orbit (corresponding to different time periods).

Step 1: The MN selects at least one SN based on the measurement report, and sends an SN addition request (SN Addition Request) (in advance), where a request message includes a timestamp t1_path.

In addition, the request message may be forwarded and transmitted by at least one relay node (relay node, RN).

It should be noted that sending the SN addition request in advance can reduce a mobility interruption delay, and avoid a communication failure caused by untimely SN update.

Step 2: The SN returns an SN request acknowledgment (SN Addition Request Acknowledge) based on information such as a resource status of the SN, where acknowledgment information includes a timestamp t2_path.

Step 2a: The MN determines MN-SN delay compensation information (delay_offset_SN, that is, the first time information described in the foregoing embodiment) based on t1_path and t2_path, where the MN-SN delay compensation information is used to adjust a length of a PDCP PDU buffer window on an SN side (to be specific, the SN needs to buffer PDCP PDUs that arrive before expiration of delay_offset_SN, and then deliver a combined PDCP PDU to an upper layer), and the MN-SN delay compensation information is sent to the SN along with Xn user plane address (Xn-U Address) indication information.

Step 3: The MN indicates UE delay compensation information (delay_offset_UE, that is, the second time information described in the foregoing embodiment) by using an RRC reconfiguration message, where the UE delay compensation information is used to adjust a length of a PDCP PDU buffer window on a UE side (to be specific, the UE node needs to buffer PDCP PDUs that arrive before expiration of delay_offset_UE, and then deliver a combined PDCP PDU to an upper layer).

Step 4: The UE node returns an RRC reconfiguration complete acknowledgment to the MN.

Step 5: The MN returns an SN reconfiguration complete acknowledgment to the SN.

Step 6: The UE accesses the SN.

Step 7: The MN sends UE context information to the SN, to implement SN status transfer (status transfer).

The UE context information includes bearer (bearer) information of the UE, and indicates a corresponding distribution channel for sending data to the UE.

Step 8: A user plane function (user plane function, UPF) sends service data of the UE to the MN.

Step 9a: The MN forwards a first part of the service data of the UE to the SN based on the MN-SN delay compensation information.

Step 9b: Send a second part of the service data of the UE to the UE based on the UE delay compensation information.

In this embodiment of this application, the foregoing method is applied to an MN-SN scenario, signaling (the Xn user plane address indication information) specifically used to carry the first time information and signaling (the RRC reconfiguration message) used to carry the second time information are provided, and a first sending time (the timestamp t1_path carried in the SN addition request) and a second sending time (the timestamp t2_path carried in the SN request acknowledgment) that are used to determine the first time information are further provided. This reduces buffer pressure of the UE in a scenario in which the MN distributes data, and reduces power consumption of the UE for waiting for data.

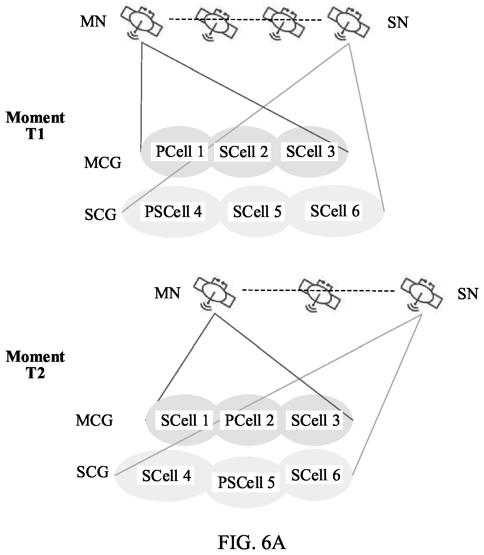

In some cases, when either the MN or the SN is an NTN node, fast movement of a satellite node causes frequent changes (for example, switching, addition, and deletion) of a PCell/PScell/Scell. FIG. 6A is a diagram of cell changes at different moments according to an embodiment of this application. As shown in FIG. 6A, at a moment T1, a primary cell corresponding to an MN is a PCell 1, and a primary secondary cell corresponding to an SN is a PSCell 4. At a moment T2, the primary cell corresponding to the MN switches to a PCell 2, and the primary secondary cell corresponding to the SN is a PSCell 5. Correspondingly, the SCell also changes.

Based on this, in the embodiment corresponding to FIG. 5, reference may also be made to an SN switching process. To be specific, the MN may pay attention to a location change of the SN, perform SN switching based on the location change of the SN, and perform delay compensation for a switched SN.

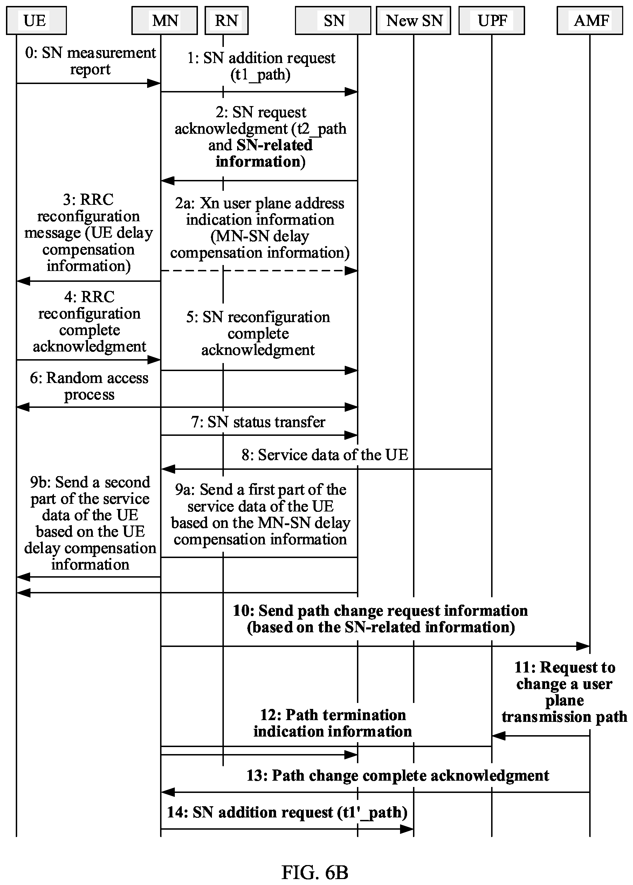

FIG. 6B is a flowchart of a dual connectivity communication method integrating SN switching according to an embodiment of this application. As shown in FIG. 6B, the method includes the following steps.

Step 0: A UE reports an SN measurement report to an MN.

Step 1: The MN selects at least one SN based on the measurement report, and sends an SN addition request (SN Addition Request) (in advance), where a request message includes a timestamp t1_path.

Step 2: The SN returns an SN request acknowledgment (SN Addition Request Acknowledge) based on information such as a resource status of the SN, where acknowledgment information includes a timestamp t2_path.

In addition, the acknowledgment information may further include SN-related information. The SN-related information includes a buffer capability of the SN, duration in which the SN is capable of providing a service for a specified UE or a specified area, or location-related information of the SN. Time information may be serving period information or timer information. The location-related information may be whether a distance between the UE and a reference location of the SN is greater than a threshold 1 (where an SN whose distance is not greater than the threshold 1 may be added by the MN as a node for distributing data).

Step 2a: The MN determines MN-SN delay compensation information based on t1_path and t2_path, where the MN-SN delay compensation information is sent to the SN along with Xn user plane address (Xn-U Address) indication information.

Step 3: The MN indicates UE delay compensation information by using an RRC reconfiguration message.

Step 4: The UE node returns an RRC reconfiguration complete acknowledgment to the MN.

Step 5: The MN returns an SN reconfiguration complete acknowledgment to the SN.

Step 6: The UE accesses the SN.

Step 7: The MN sends UE context information to the SN, to implement SN status transfer (status transfer).

The UE context information includes bearer (bearer) information of the UE, and indicates a corresponding distribution channel for sending data to the UE.

Step 8: A user plane function (user plane function, UPF) sends service data of the UE to the MN.

Step 9a: The MN forwards a first part of the service data of the UE to the SN based on the MN-SN delay compensation information.

Step 9b: Send a second part of the service data of the UE to the UE based on the UE delay compensation information.

Step 10: When determining, based on the SN-related information, that a transmission path from a core network to the SN needs to be updated, the MN sends path change request information to an AMF (access and mobility management function, access and mobility management) node.

The path change request information may be specifically a protocol data unit (protocol data unit, PDU) session resource modification indication.

Step 11: The AMF node requests the UPF node to change a user plane transmission path.

Specifically, the user plane transmission path is changed by requesting a bearer modification (bearer modification).

Step 12: The UPF node sends path termination indication information to the SN through forwarding of the MN.

Step 13: The AMF node returns a path change complete acknowledgment to the MN.

Corresponding to step 10, the path change complete acknowledgment is a PDU session resource modification complete acknowledgment.

Step 14: After the time/location information expires, the original SN releases a UE context. The MN sends an SN addition request to a new SN, and completes subsequent related operations.

Similarly, an SN addition request message sent by the MN to the new SN may also include a timestamp (t1'_path), used to determine delay compensation information between the MN and the new SN. The foregoing steps may be repeatedly performed in subsequent steps.

It can be learned that in this embodiment of this application, when at least one of the MN and the SN is an NTN node, the MN may perform SN switching based on the SN-related information, so that the MN can obtain an SN whose signal quality meets a requirement to perform data distribution, thereby ensuring quality of communication with the UE.

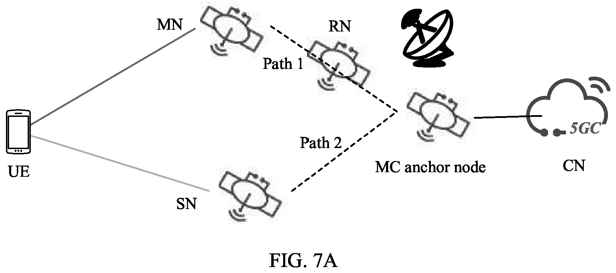

Optionally, the method in FIG. 4A may be applied to an MC anchor (Anchor) node scenario. FIG. 7A is a diagram of an MC anchor node communication scenario according to an embodiment of this application. As shown in FIG. 7A, service data sent by a CN to a UE may be sent by the CN to an MC anchor node, then the MC anchor node distributes the service data to an MN and an SN, and finally the MN and the SN send the data to the UE. In other words, a path 1 corresponding to the MC anchor node → the MN → the UE and a path 2 corresponding to the MC anchor node → the MN → the UE are included. One or more RNs may be further included between the MC anchor node and the MN.

Therefore, when the method in FIG. 4A is applied to the MC anchor node scenario, the first node is the MC anchor node, and the second node is an NTN node and may be specifically the MN or the SN (a node to which the first time information is sent is a node that is in the MN or the SN and that is farther away from the MC anchor node). Other descriptions are consistent with the related descriptions in FIG. 4A, and details are not described herein again.

In this embodiment of this application, the method in FIG. 4A is applied to the MC anchor node, to perform delay compensation on the MN or the SN, so that time for the MN to send data to the target UE is close to time for the SN to send data to the target UE. This reduces a data receiving time window of the target UE, and reduces the buffer pressure of the target UE.

Optionally, the method in FIG. 4B(a) and FIG. 4B(b) may also be applied to the MC anchor (Anchor) node scenario. However, some of steps need to be transformed. Therefore, the following two methods may be obtained by transforming the method in FIG. 4B(a) and FIG. 4B(b).

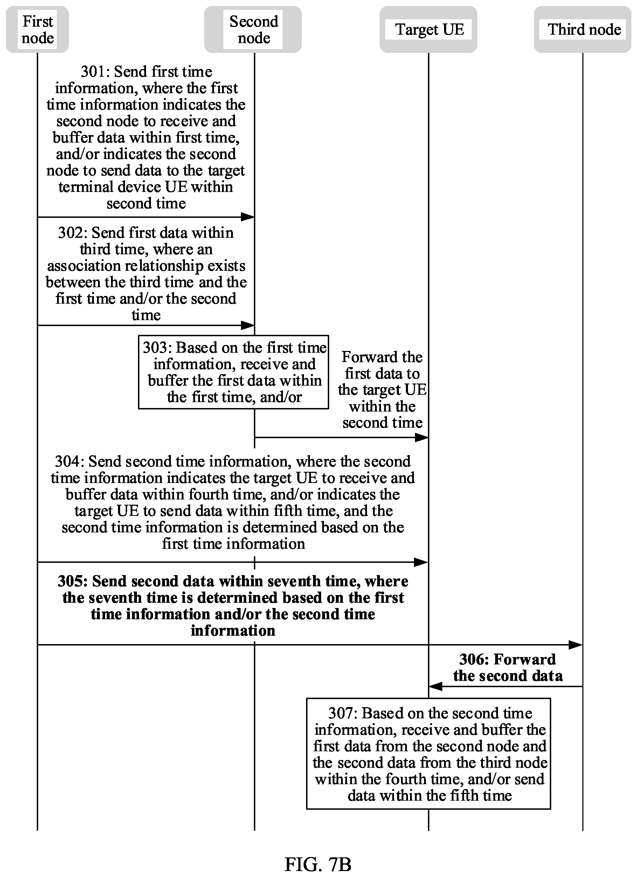

FIG. 7B is a flowchart of a communication method applied to an MC anchor node according to an embodiment of this application. As shown in FIG. 7B, the method includes the following procedure.

301: A first node sends first time information to a second node, where the first time information indicates the second node to receive and buffer data within first time, and/or indicates the second node to send data to a target terminal device UE within second time, and the second node is a non-terrestrial network NTN node.

302: The first node sends first data to the second node within third time, where an association relationship exists between the third time and the first time and/or the second time.

303: Based on the first time information, the second node receives and buffers the first data within the first time, and/or forwards the first data to the target UE within the second time.

304: The first node sends second time information to the target UE, where the second time information indicates the target UE to receive and buffer data within fourth time, or indicates the target UE to send data within fifth time, and the second time information is determined based on the first time information.

305: The first node sends second data to a third node within seventh time, where the seventh time is determined based on the first time information and/or the second time information.

306: The third node receives the second data, and forwards the second data to the target UE.

307: The target UE receives the second time information from the first node, and based on the second time information, receives and buffers the first data from the second node and the second data from the third node within the fourth time, and/or sends data within the fifth time.

In other words, after sending the first time information to the second node (an MN or an SN), an MC anchor node, as the first node, may send the second time information to the target UE, so that the target UE receives data from the third node (where the third node is a node different from the second node; and if the second node is the MN, the third node is the SN; or if the second node is the SN, the third node is the MN) and the second node based on the second time information. In this way, the target UE can receive data based on an indication of the MC anchor node, thereby omitting unnecessary waiting time and reducing power consumption for waiting.

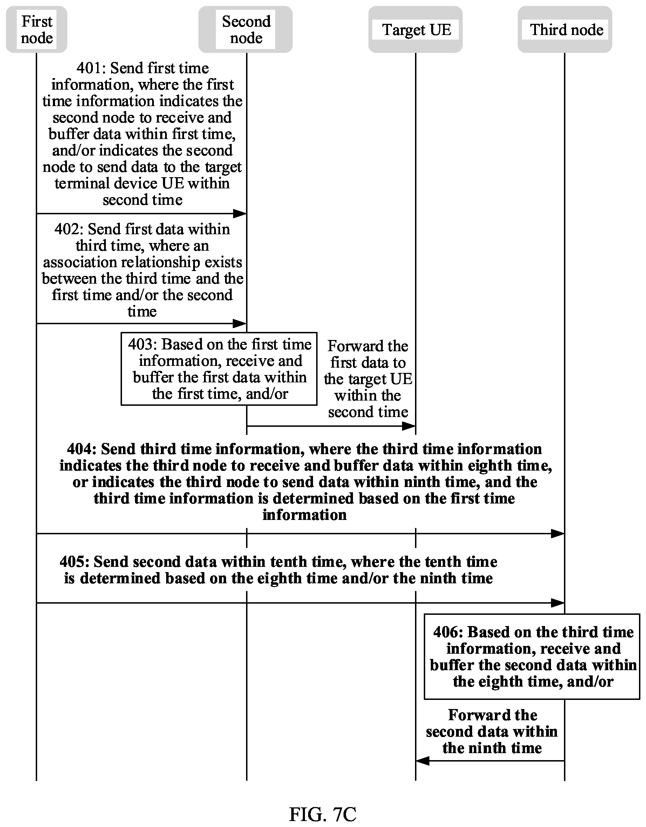

Alternatively, FIG. 7C is a flowchart of another communication method applied to an MC anchor node according to an embodiment of this application. As shown in FIG. 7C, the method includes the following procedure.

401: A first node sends first time information to a second node, where the first time information indicates the second node to receive and buffer data within first time, and/or indicates the second node to send data to a target terminal device UE within second time, and the second node is a non-terrestrial network NTN node.

402: The first node sends first data to the second node within third time, where an association relationship exists between the third time and the first time and/or the second time.

403: Based on the first time information, the second node receives and buffers the first data within the first time, and/or forwards the first data to the target UE within the second time.

404: The first node sends third time information to a third node, where the third time information indicates the third node to receive and buffer data within eighth time, or indicates the third node to send data within ninth time, and the third time information is determined based on the first time information.

405: The first node sends second data to the third node within tenth time, where the tenth time is determined based on the eighth time and/or the ninth time.

406: Based on the third time information, the third node receives and buffers the second data within the eighth time, and/or forwards the second data to the target UE within the ninth time.

Correspondingly, the target UE receives the first data from the second node and the second data from the third node.

In other words, the first node indicates data receiving and sending time of the second node to the second node by using the first time information, and indicates data receiving and sending time of the third node to the third node by using the third time information, so that the second node and the third node send data to the target UE in a coordinated time window. This reduces buffer pressure of the target UE.

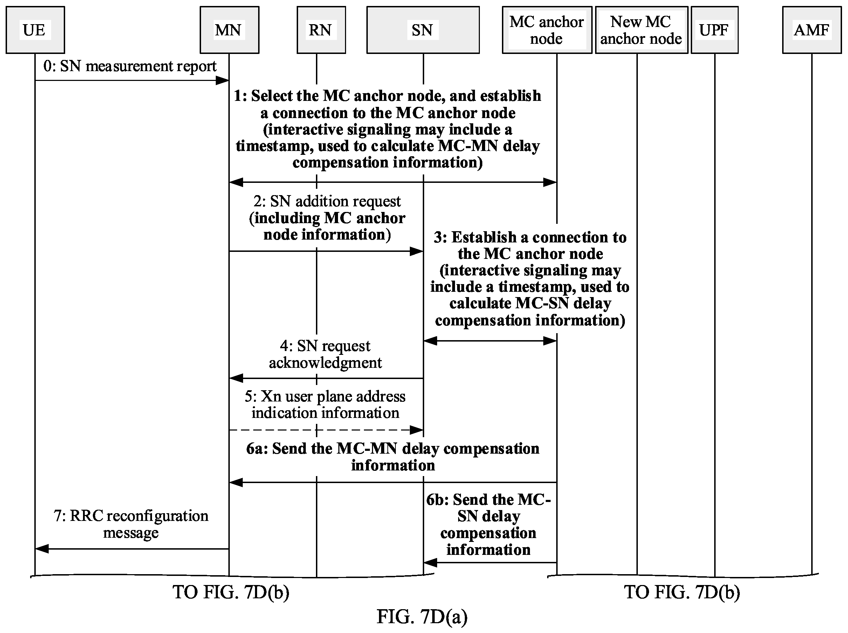

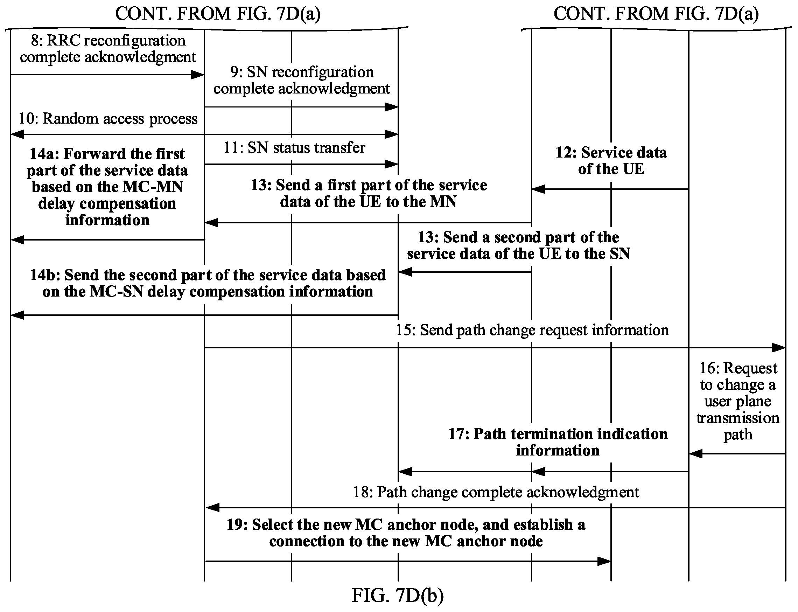

Optionally, in the MC anchor node scenario, because at least one of the MN node and the SN node is an NTN node, the MC anchor node changes accordingly. Based on this, FIG. 7D(a) and FIG. 7D(b) are flowcharts of an MC anchor node connection and switching method according to an embodiment of this application. As shown in FIG. 7D(a) and FIG. 7D(b), the method includes the following steps.

Step 0: A UE reports an SN measurement report to an MN.

Step 1: The MN selects an MC anchor node based on the SN measurement report, and establishes a connection to the MC anchor node.

The MC anchor node is characterized by maintaining good quality of communication with both the MN and an SN.

Step 2: The MN selects at least one SN based on the measurement report, and sends an SN addition request (in advance), where the SN addition request includes MC anchor node information.

The MC anchor node information includes an address, a number, a validity period, and the like of the MC anchor node. Request information may be forwarded and transmitted by at least one relay node RN.

Step 3: The SN establishes a connection to the MC anchor node based on related information of the MC anchor node.

Step 4: The SN returns an SN request acknowledgment based on information such as a resource status of the SN.

Step 5: The MN sends Xn user plane address (Xn-U Address) indication information to the SN.

Step 6a: The MC anchor node sends MC-MN delay compensation information to the MN.

A process in which the MC anchor node obtains the MC-MN delay compensation information may include: The MC anchor node adds, in a process of establishing a connection to the MN, a timestamp to signaling sent to the MN, the MN adds a timestamp to a signaling fed back to the MC anchor node, and the MC anchor node obtains the MC-MN delay compensation information through calculation based on the two timestamps.

Step 6b: The MC anchor node sends MC-SN delay compensation information to the SN.

A process in which the MC anchor node obtains the MC-SN delay compensation information may include: The MC anchor node adds, in a process of establishing a connection to the SN, a timestamp to signaling sent to the SN, the SN adds a timestamp to a signaling fed back to the MC anchor node, and the MC anchor node obtains the MC-SN delay compensation information through calculation based on the two timestamps.

Either step 6a or step 6b may be performed, or both may be performed.

Step 7: The MN sends an RRC reconfiguration message to the UE.

Step 8: The UE node returns an RRC reconfiguration complete acknowledgment to the MN.

Step 9: The MN returns an SN reconfiguration complete acknowledgment to the SN.

Step 10: The UE accesses the SN.

Step 11: The MN sends the UE context information to the SN, to implement SN status transfer.

Step 12: A UPF sends service data of the UE to the MC anchor node.

In other words, the UPF does not need to forward a part of data of the UE to the SN via the MN, that is, a subsequent PDCP data offloading decision is controlled by the MC anchor node.

Step 13: The MC anchor node sends a first part of the service data of the UE to the MN, and sends a second part of the service data of the UE to the SN.

Step 14a: The MN forwards the first part of the service data to the UE (based on the MC-MN delay compensation information).

Step 14b: The SN forwards the second part of the service data to the UE (based on the MC-SN delay compensation information).

The MN or the SN directly forwards the service data to the UE, or forwards the service data based on the delay compensation information. This is determined based on whether step 6a or 6b is performed.

Step 15: When a transmission path from a CN to the SN needs to be updated, the MN sends path change request information to the AMF node.

Step 16: The AMF node requests the UPF node to change a user plane transmission path.

Step 17: The UPF node does not need to send path termination indication information to the SN via the MN, and may directly send the indication information to the SN via the MC anchor node.

Step 18: The AMF node returns a path change complete acknowledgment to the MN.

Step 19: The MN selects a new appropriate MC anchor node to establish a connection after expiration of a validity period of a source MC anchor node, or the MN may select a new appropriate MC anchor node to establish a connection before expiration of the validity period.

It can be learned that in this embodiment of this application, a specific implementation process in which the MC anchor node sends delay compensation information to the MN and the SN in an application scenario of the MC anchor node is provided. In addition, because at least one of the MN and the SN is an NTN node, the MC anchor node changes, and the core network may switch the MC anchor node. Therefore, the MC anchor node can perform data distribution while meeting a quality requirement, ensuring quality of communication with the UE.

**In** a possible case, the MC anchor node may not send the delay compensation information to the MN and the SN, but directly distribute the first data to the MN and distribute the second data to the SN. In this case, a condition that the MC anchor node needs to meet is that a difference between distances from the MC anchor node to the MN and the SN is less than a preset threshold, where the preset threshold is, for example, 300 km (kilometers). In this way, time of arrival of the first data sent by the MC anchor node at the MN is close to time of arrival of the second data sent by the MC anchor node at the SN (a difference is less than 1 ms). Further, time for the MN to send the first data to the target UE is also close to time for the SN to send the second data to the target UE. This reduces time for the UE to wait for data of a node at a longer distance, thereby reducing the buffer pressure of the UE.

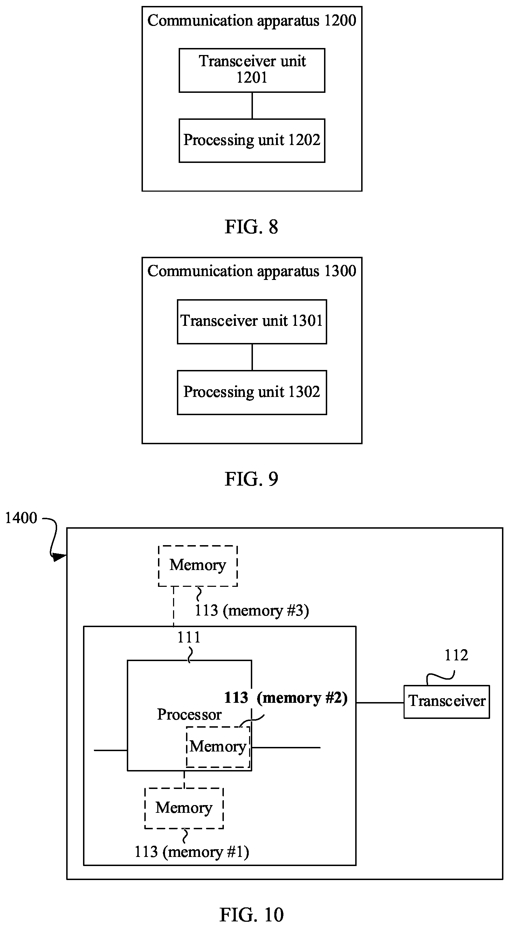

FIG. 8 is a diagram of a structure of a communication apparatus. An implementation of this application further provides a communication apparatus 1200. The communication apparatus 1200 may be a terminal device, or may be used in, but not limited to, a terminal device. The communication apparatus 1200 includes a transceiver unit 1201 and a processing unit 1202. The transceiver unit 1201 may be or may be deployed in a unit or a module that can implement an information receiving and sending function, for example, a transceiver, a transceiver antenna, or an input/output interface. The processing unit 1202 may be or may be deployed in a processor.

The transceiver unit 1201 is configured to send first time information to a second node, where the first time information indicates the second node to receive and buffer data within first time, and/or indicates the second node to send data to a target terminal device UE within second time.

The transceiver unit 1201 is further configured to send first data to the second node within third time, where an association relationship exists between the third time and the first time and/or the second time, and at least one of a first node and the second node is a non-terrestrial network NTN node.

Optionally, the transceiver unit 1201 is further configured to: send second time information to the target UE, where the second time information indicates the target UE to receive and buffer data within fourth time, or indicates the target UE to send data within fifth time, and the second time information is determined based on the first time information; and send second data to the target UE within sixth time, where an association relationship exists between the sixth time and the fourth time and/or the fifth time.

Optionally, the first time information is determined based on a first sending time and a second sending time, the first sending time is a moment at which the first node sends a first message to the second node, and the second sending time is a moment at which the second node feeds back a second message based on the first message. Alternatively, the first time information is determined based on a first sending time and a first receiving moment, and the first receiving moment is a moment at which the first node receives a second message from the second node.

Optionally, at least one of the following is included: The first sending time is a timestamp in the first message; or the second sending time is a timestamp in the second message.

Optionally, the first time information is determined based on related information of the second node. The related information of the second node includes at least one of the following: location information of the second node, motion path information of the second node, or a buffer capability of the second node.

Optionally, the first node is a master node MN, the second node is a secondary node SN, the first message is an SN addition request message, the second message is an SN request acknowledgment message, and the SN addition request message is used to request to obtain a communication resource for the target UE from the SN.

Optionally, the first time information is carried in an Xn user plane address indication message between the MN and the SN.

Optionally, the second time information is carried in a radio resource control RRC reconfiguration message.

Optionally, the first data and the second data are packet data convergence protocol-protocol data units PDCP PDUs.

Optionally, the method further includes at least one of the following: The first time information is carried in a PDCP PDU header of the first data; or the second time information is carried in a PDCP PDU header of the second data.

Optionally, the transceiver unit 1201 is further configured to: receive SN-related information from the SN, where the SN-related information includes at least one of the following: duration in which the SN is capable of providing a service for at least one UE or at least one area, or location-related information of the SN; and determine, based on the SN-related information, that the SN ends the service, and send an SN addition request message to another SN other than the SN.

Optionally, the communication apparatus 1200 shown in FIG. 8 may alternatively be configured to perform the following operations.

The transceiver unit 1201 is configured to receive first time information from a first node, where the first time information indicates a second node to receive and buffer data within first time, or indicates a second node to send data to a target terminal device UE within second time.

The processing unit 1202 is configured to: based on the first time information in combination with the transceiver unit 1201, receive and buffer first data within the first time, and/or send third data to the target UE within the second time, where at least one of the first node and the second node is a non-terrestrial network NTN node.

Optionally, before receiving the first time information from the first node, the transceiver unit 1201 is further configured to: receive a first message from the first node, and feed back a second message to the first node based on the first message.

Optionally, the first message and/or the second message include/includes timestamps/a timestamp.

Optionally, the first node is an MN, the second node is an SN, the first message is an SN addition request message, the second message is an SN request acknowledgment message, and the SN addition request message is used to request to add the SN as a user plane resource for the MN.

Optionally, the first time information is carried in an Xn user plane address indication message between the MN and the first SN.

Optionally, the first data and the third data are PDCP PDUs.

Optionally, the first time information is carried in a PDCP PDU header of the first data.

Optionally, the transceiver unit 1201 is further configured to send SN-related information to the MN, where the SN-related information includes at least one of the following: a buffer capability of the SN, duration in which the SN is capable of providing a service for at least one UE or at least one area, location-related information of the SN, or motion path information of the SN.

FIG. 9 is a diagram of a structure of a communication apparatus. An implementation of this application further provides a communication apparatus 1300. The communication apparatus 1300 may be a terminal device, or may be used in, but not limited to, a terminal device. The communication apparatus 1300 includes a transceiver unit 1301 and a processing unit 1302. The transceiver unit 1301 may be or may be deployed in a unit or a module that can implement an information receiving and sending function, for example, a transceiver, a transceiver antenna, or an input/output interface. The processing unit 1302 may be or may be deployed in a processor.

The transceiver unit 1301 is configured to receive second time information from a first node, where the second time information indicates a target UE to receive and buffer data within fourth time, or indicates a target UE to send data within fifth time.

The processing unit 1302 is configured to: based on the second time information in combination with the transceiver unit 1301, receive and buffer first data from the first node and third data from a second node within the fourth time, and/or send sixth data within the fifth time, where at least one of the first node and the second node is a non-terrestrial network NTN node.

In some possible implementations, the first node is an MN, and the second time information is carried in a radio resource control RRC reconfiguration message.

In some possible implementations, the first data and the third data are PDCP PDUs.

In some possible implementations, the second time information is carried in a PDCP PDU header of the first data.

FIG. 10 is a diagram of a hardware structure of a communication apparatus 1400 according to an embodiment of this application. For a structure of the communication apparatus 1200 or the communication apparatus 1300, refer to the structure shown in FIG. 10. The communication apparatus 1400 includes a processor 111 and a transceiver 112. The processor 111 and the transceiver 112 are electrically coupled.

The processor 111 is configured to execute a part or all of computer program instructions in a memory. When the part or all of the computer program instructions are executed, the apparatus is enabled to perform the method according to any one of the foregoing embodiments.

The transceiver 112 is configured to communicate with another device, for example, send first time information to a second node, where the first time information indicates the second node to receive and buffer data within first time, and/or indicates the second node to send data to a target terminal device UE within second time.

Optionally, the apparatus further includes a memory 113, configured to store computer program instructions. Optionally, the memory 113 (a memory #1) is located inside the apparatus, the memory 113 (a memory #2) is integrated with the processor 111, or the memory 113 (a memory #3) is located outside the apparatus.

It should be understood that the communication apparatus 1300 shown in FIG. 10 may be a chip or a circuit, for example, may be a chip or a circuit disposed in a terminal apparatus or the communication apparatus. The transceiver 112 may alternatively be a communication interface. The transceiver includes a receiver and a transmitter. Further, the communication apparatus 1300 may further include a bus system.

The processor 111, the memory 113, and the transceiver 112 are connected through the bus system. The processor 111 is configured to execute the instructions stored in the memory 113, to control the transceiver to receive and send signals, and complete steps of a transmit end or a receive end in the implementation method in this application. The memory 113 may be integrated into the processor 111, or may be disposed separately from the processor 111.

In an implementation, a function of the transceiver 112 may be implemented by using a transceiver circuit or a dedicated transceiver chip. The processor 111 may be implemented by using a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It should be further understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any other appropriate type of memories.

An embodiment of this application provides a computer storage medium storing a computer program. The computer program includes and is configured to perform the method corresponding to the first node, the second node, or the target UE in the foregoing embodiments.

An embodiment of this application provides a computer program product including instructions. When the computer program product runs on a computer, the computer is enabled to perform the method corresponding to the first node, the second node, or the target UE in the foregoing embodiments.

It should be understood that in embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first node, wherein the method comprises:
sending first time information to a second node, wherein the first time information indicates the second node to receive and buffer data within first time, and/or indicates the second node to send data to a target terminal device UE within second time; and
sending first data to the second node within third time, wherein an association relationship exists between the third time and the first time and/or the second time, and at least one of the first node and the second node is a non-terrestrial network NTN node.

2. The method according to claim 1, wherein the method further comprises:
sending second time information to the target UE, wherein the second time information indicates the target UE to receive and buffer data within fourth time, and/or indicates the target UE to send data within fifth time, and the second time information is determined based on the first time information; and
sending second data to the target UE within sixth time, wherein an association relationship exists between the sixth time and the fourth time and/or the fifth time.

3. The method according to claim 1 or 2, wherein the first time information is determined based on a first sending time and a second sending time, the first sending time is a moment at which the first node sends a first message to the second node, and the second sending time is a moment at which the second node feeds back a second message based on the first message; or
the first time information is determined based on a first sending time and a first receiving moment, and the first receiving moment is a moment at which the first node receives a second message from the second node.

4. The method according to claim 3, comprising at least one of the following:
the first sending time is a timestamp in the first message; or
the second sending time is a timestamp in the second message.

5. The method according to claim 1 or 2, wherein the first time information is determined based on related information of the second node, and the related information of the second node comprises at least one of the following: location information of the second node, motion path information of the second node, or a buffer capability of the second node.

6. The method according to claim 3 or 4, wherein the first node is a master node MN, the second node is a secondary node SN, the first message is an SN addition request message, the second message is an SN request acknowledgment message, and the SN addition request message is used to request to add the SN as a user plane resource for the MN.

7. The method according to claim 6, wherein the first time information is carried in an Xn user plane address indication message between the MN and the SN.

8. The method according to claim 6 or 7, wherein the second time information is carried in a radio resource control RRC reconfiguration message.

9. The method according to any one of claims 2 to 8, wherein the first data and the second data are packet data convergence protocol-protocol data units PDCP PDUs.

10. The method according to claim 9, wherein the method further comprises at least one of the following:
the first time information is carried in a PDCP PDU header of the first data; or
the second time information is carried in a PDCP PDU header of the second data.

11. The method according to claim 6, wherein the method further comprises:
receiving SN-related information from the SN, wherein the SN-related information comprises at least one of the following: duration in which the SN is capable of providing a service for at least one UE or at least one area, or location-related information of the SN; and
determining, based on the SN-related information, that the SN ends the service, and sending an SN addition request message to another SN other than the SN.

12. A communication method, applied to a second node, wherein the method comprises:
receiving first time information from a first node, wherein the first time information indicates the second node to receive and buffer data within first time, or indicates the second node to send data to a target terminal device UE within second time; and
based on the first time information, receiving and buffering first data within the first time, and/or sending third data to the target UE within the second time, wherein at least one of the first node and the second node is a non-terrestrial network NTN node.

13. The method according to claim 12, wherein before receiving the first time information from the first node, the method further comprises: receiving a first message from the first node, and feeding back a second message to the first node based on the first message.

14. The method according to claim 13, wherein the first message and/or the second message comprise/comprises timestamps/a timestamp.

15. The method according to claim 13 or 14, wherein the first node is an MN, the second node is an SN, the first message is an SN addition request message, the second message is an SN request acknowledgment message, and the SN addition request message is used to request to obtain a communication resource for the target UE from the SN.

16. The method according to claim 15, wherein the first time information is carried in an Xn user plane address indication message between the MN and the first SN.

17. The method according to any one of claims 12 to 16, wherein the first data and the third data are PDCP PDUs.

18. The method according to claim 17, wherein the first time information is carried in a PDCP PDU header of the first data.

19. The method according to any one of claims 15 to 18, wherein the method further comprises:
sending SN-related information to the MN, wherein the SN-related information comprises at least one of the following: a buffer capability of the SN, duration in which the SN is capable of providing a service for at least one UE or at least one area, location-related information of the SN, or motion path information of the SN.

20. A communication method, applied to a target UE, wherein the method comprises:
receiving second time information from a first node, wherein the second time information indicates the target UE to receive and buffer data within fourth time, or indicates the target UE to send data within fifth time; and
based on the second time information, receiving and buffering first data from the first node and third data from a second node within the fourth time, and/or sending sixth data within the fifth time, wherein at least one of the first node and the second node is a non-terrestrial network NTN node.

21. The method according to claim 20, wherein the first node is an MN, and the second time information is carried in a radio resource control RRC reconfiguration message.

22. The method according to claim 20 or 21, wherein the first data and the third data are PDCP PDUs.

23. The method according to claim 22, wherein the second time information is carried in a PDCP PDU header of the first data.

24. A communication apparatus, comprising a unit configured to perform the method according to any one of claims 1 to 11, comprising a unit configured to perform the method according to any one of claims 12 to 19, or comprising a unit configured to perform the method according to any one of claims 20 to 23.

25. A communication system, wherein the system comprises the communication apparatus according to claim 24.

26. A computer-readable storage medium, wherein the computer-readable storage medium stores computer instructions, and the computer instructions instruct a communication device to perform the method according to any one of claims 1 to 11, the computer instructions instruct a communication device to perform the method according to any one of claims 12 to 19, or the computer instructions instruct a communication device to perform the method according to any one of claims 20 to 23.

27. A circuit, comprising a processor and an interface, configured to execute a computer program or instructions stored in a memory, to perform the method according to any one of claims 1 to 11, perform the method according to any one of claims 12 to 19, or perform the method according to any one of claims 20 to 23.
